# EUROPEAN PATENT SPECIFICATION

(11) **EP 2 999 564 B1**
(45) Date of publication and mention of the grant of the patent: **29.07.2020**
(21) Application number: 14726577.1
(22) Date of filing: 23.05.2014
(51) Int. Cl.: B23C 5/10, B23C 5/28, B23B 31/11

(54) **A TOOL COMPRISING AN INTERCHANGEABLE BALL MILL**
WERKZEUG MIT AUSTAUSCHBAREM KUGELFÖRMIGEN FRÄSER
OUTIL AVEC BROYEUR À BOULETS INTERCHANGEABLE

(30) Priority: 23.05.2013 IT FI20130119
(43) Date of publication of application: 30.03.2016
(73) Proprietor: Nuovo Pignone S.r.l., 50127 Florence (IT)
(72) Inventor: CIGNI, Emanuele, I-50127 Florence (IT)
(74) Representative: BRP Renaud & Partner mbB Rechtsanwälte Patentanwälte Steuerberater
(86) International application number: PCT/EP2014/060619
(87) International publication number: WO 2014/187938

(56) References cited:
- EP-A1- 2 551 046
- EP-A2- 1 029 620
- WO-A1-98/13161
- JP-A- 2001 087 929
- US-A- 3 719 367
- US-A1- 2006 062 642
- US-A1- 2013 119 619

## Description

### TECHNICAL FIELD

The subject matter disclosed herein relates to cutting tools for metal cutting machines. More specifically, the present invention relates to a tool according to the preamble of claim 1 comprising an adapter and an interchangeable cutting member connectable to the adapter for support on a machine tool or a machining center. Such a tool is known from JP 2001 087929 A.

### BACKGROUND ART

JP 2001 087929 A discloses an end mill comprising a body including a cutting head and a coupling shaft and a shank to be removably coupled with the body. The shank has a hollow part fitted with a fastening rod.

WO 98/13161 A1 discloses an end mill comprising a mill head, an intermediate pull rod or screw and a shank.

Several machining processes require the use of interchangeable ball-shaped cutting tools supported by a holder for connection with a rotating mandrel of machine tools.

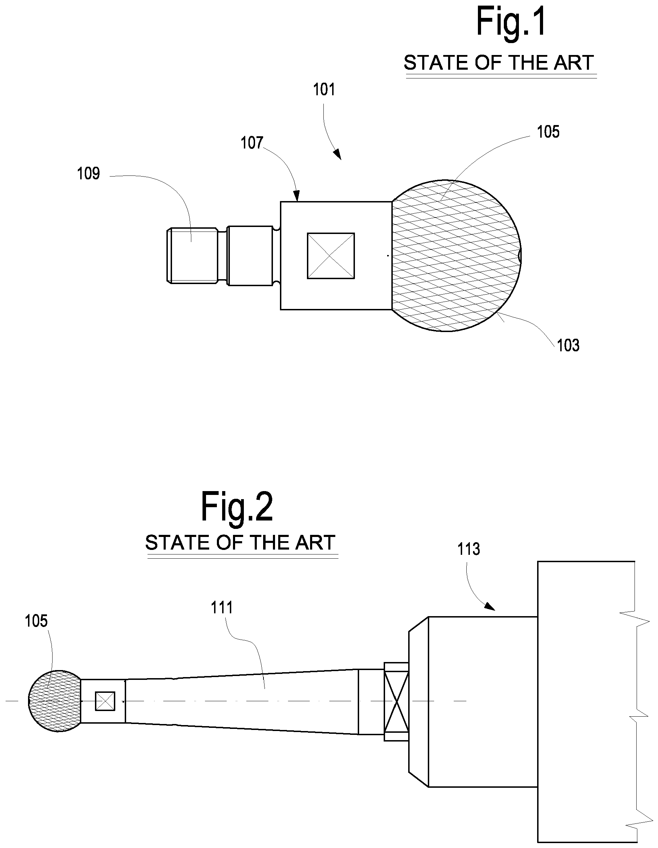

Fig. 1 illustrates a side view of an interchangeable tool according to the current art and Fig. 2 illustrates the tool of Fig. 1 connected to a mandrel of a machine tool with a tool holder therebetween. The tool 101 comprises a cutting portion 103, which is generally ball-shaped, i.e. having a cutting surface with at least a portion having a substantially spherical shape. The cutting surface of the cutting portion is provided with cutting edges 105 designed for machining of a workpiece by chip-removal, for example for machining an impeller of a turbomachine. The cutting portion 103 is monolith-ically formed with a spigot 107 having a threaded portion 109 for screw connection to a tool holder 111 shown in Fig. 2. The tool 101 is screw-connected to the tool holder 111 and the latter is mounted on a rotating mandrel 113, for example the mandrel of a working head of a machine tool or machine center.

The tool 101 according to the current art is expensive to manufacture. Moreover, delivery of a coolant or lubrication fluid in the working area of the tool 101 is difficult, especially during machining of complex workpieces, such as impeller vanes.

There is therefore a need for a cutting tool, which at least partly alleviates one or more of the drawbacks of known cutting tools.

### SUMMARY OF THE INVENTION

According to the invention there is provided a tool according to claim 1, which comprises an interchangeable cutting member and an adapter to which the interchangeable cutting member is adapted to be replaceably mounted. The interchangeable cutting member comprises a substantially ball-shaped body with a cutting surface, within which a female screw-thread is provided. The adapter is provided with a male screw-thread portion configured and arranged for screw-engagement in the female screw-thread. Moreover, at least one coolant or lubricant fluid passage is provided in the interchangeable cutting member. The coolant or lubricant fluid passage ends at the cutting surface of the ball-shaped member. A coolant or lubricant fluid delivery duct is provided in the adapter, in fluid communication with the coolant or lubricant fluid passage when the interchangeable cutting member and the adapter are screwed together. Moreover, the adapter is provided with a first conical surface and the interchangeable cutting member is provided with a second conical surface configured and arranged for mutually centering the adapter and the interchangeable cutting member, when the adapter and the interchangeable cutting member are screwed together.

The adapter is further provided with a first axial abutment surface and the interchangeable cutting member is provided with a second axial abutment surface. The first axial abutment surface and the second axial abutment surface are mutually engageable for axially positioning the interchangeable cutting member and the adapter one with respect to the other when the interchangeable cutting member and the adapter are screwed together. According to some embodiments, the first axial abutment surface and the second axial abutment surface are orthogonal to a rotation axis of the tool.

According to some embodiments not according to the invention, the first conical surface on the adapter is concave and the male screw-thread portion of the adapter is partly arranged in a cavity formed by the concave first conical surface and projects therefrom. Moreover, in these embodiments, the second conical surface on the interchangeable cutting member is a convex surface formed on a projection of the interchangeable cutting member, the female screw-thread extending in said projection, said projection being configured for engaging in the cavity formed by the concave first conical surface when the interchangeable cutting member and the adapter are screwed together.

According to a further aspect, the subject matter disclosed herein concerns a tool assembly comprising a tool as described above and a tool holder, the adapter of the tool comprising a first connector member co-acting with a second connector member provided on said tool holder.

Features and embodiments are disclosed here below and are further set forth in the appended claims, which form an integral part of the present description. The above brief description sets forth features of the various embodiments of the present invention in order that the detailed description that follows may be better understood and in order that the present contributions to the art may be better appreciated. There are, of course, other features of the invention that will be described hereinafter and which will be set forth in the appended claims. In this respect, before explaining several embodiments of the invention in details, it is understood that the various embodiments of the invention are not limited in their application to the details of the construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

As such, those skilled in the art will appreciate that the conception, upon which the disclosure is based, may readily be utilized as a basis for designing other structures, methods, and/or systems for carrying out the several purposes of the present invention. It is important, therefore, that the claims be regarded as including such equivalent constructions insofar as they do not depart from the scope of the present invention.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig. 1 illustrates a side view of a cutting tool of the current art;
Fig. 2 illustrates the use of the cutting tool of Fig. 1 on an electro-mandrel of a machine tool;
Fig. 3 illustrates a side view and a partial section of an adapter of a tool not according to the invention in one embodiment;
Figs. 4 and 5 illustrate side and partial sectional views according to lines IV-IV and V-V of Fig. 6;
Fig.6 illustrates a front view according to line VI-VI of Fig. 4;
Fig. 7 illustrates a side and partial sectional view of the tool not according to the invention according to Figs. 3 to 6 in an assembled condition;
Figs. 8 and 9 illustrate side views oriented at 90° of the tools of Figs. 3 to 7;
Fig. 10 illustrates a side and partial sectional view of an adapter of a tool according to the invention in a second embodiment;
Fig. 11 illustrates the cutting member of the tool according to the second embodiment; and
Fig. 12 illustrates a side and partial sectional view of the tool of Figs. 10 and 11 with the cutting member attached to the adapter.

### DETAILED DESCRIPTION OF EMBODIMENTS OF THE INVENTION

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

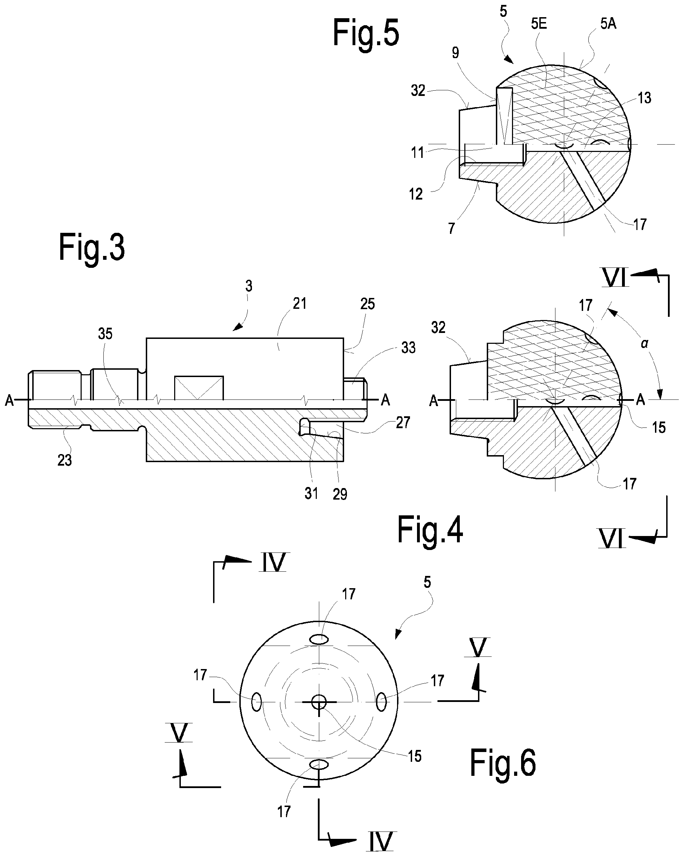

A first embodiment of a tool not according to the invention is illustrated in Figs. 3 to 9. The tool is labeled 1 as a whole. In some embodiments the tool 1 is comprised of an adapter 3 and a cutting member 5. In some embodiments the cutting member 5 and the adapter 3 are connected to one another by means of screw threads as will be described in greater detail here below.

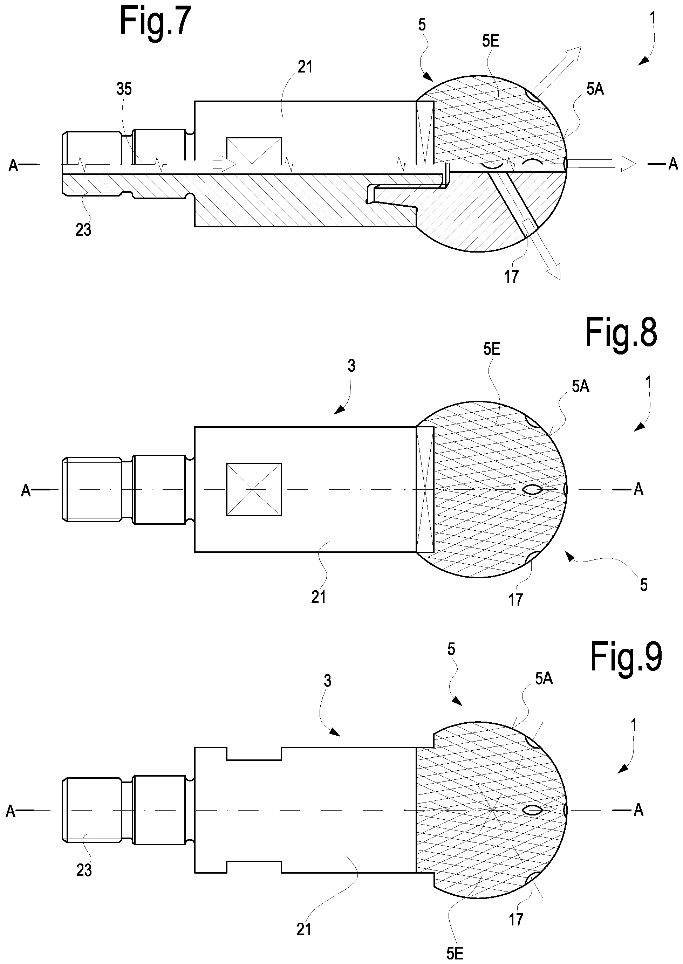

The cutting member 5 comprises an outer surface 5A provided with cutting edges, schematically shown at 5E only in Fig. 7.

The outer cutting surface 5A of the cutting member 5 has a broadly spherical shape in this embodiment.

The cutting member 5 comprises a projection 7 extending from a flat annular surface 9 provided on the cutting member 5. The annular surface 9 is orthogonal to an axis A-A of the cutting member 5.

In some embodiments the projection 7 has a cavity formed by a threaded hole 11, the inner surface whereof is provided with a female screw-thread 12.

In some embodiments a coolant and/or lubricant fluid distribution duct 13 is provided in the interior of the cutting member 5. The coolant and/or lubricant liquid distribution duct 13 is preferably parallel to and coaxial with axis A-A of the cutting member 5, said axis corresponding to the rotation axis of the tool. In some embodiments the coolant and/or lubricant liquid distribution duct 13 extends from the bottom of the threaded hole 11 and ends with a coolant and/or lubricant fluid passage 15 leading to the outer surface 5A of the cutting member 5.

In some embodiments auxiliary or additional coolant and/or lubricant fluid passages are provided in the body of the cutting member 5. In the embodiment illustrated in Figs. 1 to 9 four such additional coolant and/or lubricant fluid passages 17 are provided. The coolant and/or lubricant fluid passages 17 extend from the central fluid distribution duct 13 towards the surface 5A of the cutting member 5.

In some embodiments the passages 17 are distributed at regular angular intervals around axis A-A and are preferably oriented such as to form an angle α with the axis A-A of the tool which is different from 90°. In particular the inclination of the passages 17 is preferably such that the passages 17 end at the outer surface 5A of the cutting member 5 in the hemispherical portion of the cutting surface 5A opposite projection 7.

In some embodiments, the adapter 3 comprises a central body 21 from which a threaded spigot 23 extends. The threaded spigot 23 is configured for connection with a holder, for example a holder 111 as shown in Fig. 2.

On the end of the central body 21 to the spigot 23, the adapter 3 is provided with a preferably planar front surface 25. The front surface 25 can be annular and surrounding an inner cavity 27 extending inside the central body 21.

In some embodiments the inner cavity 27 has an inner side surface 29 having a conical frustum-shaped form and ends with a bottom 31. The inclination of the conical frustum-shaped surface 29 is substantially the same as the inclination of an external conical frustum-shaped surface 32 provided on the outside of the projection 7.

From the bottom 31 of the inner cavity 27 of the adapter 3 a male screw-thread portion 33 extends coaxial with the conical frustum-shaped surface 29 and projects beyond the planar annular surface 25.

As can be better appreciated from Fig. 7, when the cutting member 5 is connected with the adapter 3, the male screw-thread portion 33 of the adapter 3 is screw-engaged with the female screw-thread 12 provided on the inner surface of cavity 11 formed in the cutting member 5 so as to provide connection between the adapter 3 and the cutting member 5.

The cutting member 5 and the adapter 3 are screwed together until the annular planar surface 25 abuts against the annular planar surface 9 provided on the cutting member 5, the surfaces 25 and 9 providing first and second abutting surfaces respectively, which define the mutual axial position of the cutting member 5 with respect to the adapter 3 when the two components of the tool 1 are connected to one another.

The concave conical frustum-shaped surface 29 co-acts with the convex conical frustum-shaped surface 32 to provide a centering and a supporting action during screw-connection of the adapter 3 to the cutting member 5.

The depth of the inner cavity 27 and the extension of the projection 7, as well as the length of the male screw-thread portion 33 and the depth of the cavity 11 are chosen so that in the assembled condition (Fig. 7) the cutting member 25 and the adapter 3 are in mutual contact only along the two conical frustum-shaped surfaces 29 and 32 and at the mutually meshing screw-threads provided on the male screw-thread portion 33 and in the cavity 11.

The adapter 3 is provided with a coolant and/or lubricant delivered duct 35. In some embodiments the coolant and/or lubricant fluid delivery duct 35 is coaxial with the adapter 3, i.e. the axis of the duct 35 coincides with the axis A-A of the adapter 3 and correspondingly with the axis A-A of the cutting member 5 and of the assembled tool 1 (see Figs. 7, 8 and 9).

The coolant and/or lubricant delivery duct 35 extends from one end of the adapter 3 to the opposite end thereof. More specifically, the coolant and/or lubricant fluid delivery duct 35 extend from the terminal end surface of the spigot 23 to the front surface of the male screw-thread portion 33.

When the cutting member 5 and the adapter 3 are screw connected to one another (Fig. 7) a distribution system for delivering the coolant or lubricant fluid is established, which extends from the spigot 23 to the cutting surface 5A of the cutting member 5. A coolant and/or lubricant fluid can thus be dispensed through the holder 111 (which can similarly be provided with a through passage), across the adapter 3 and the cutting member 5 and finally delivered exactly there where it is needed, namely in the area of contact between the cutting surface 5A and a work-piece being machine with the tool 1. Delivery of the coolant and/or lubricant fluid is thus made easier in all those situations where delivery of the coolant and/or lubricant fluid through an external nozzle would be difficult or critical, for example inside a vane of an impeller.

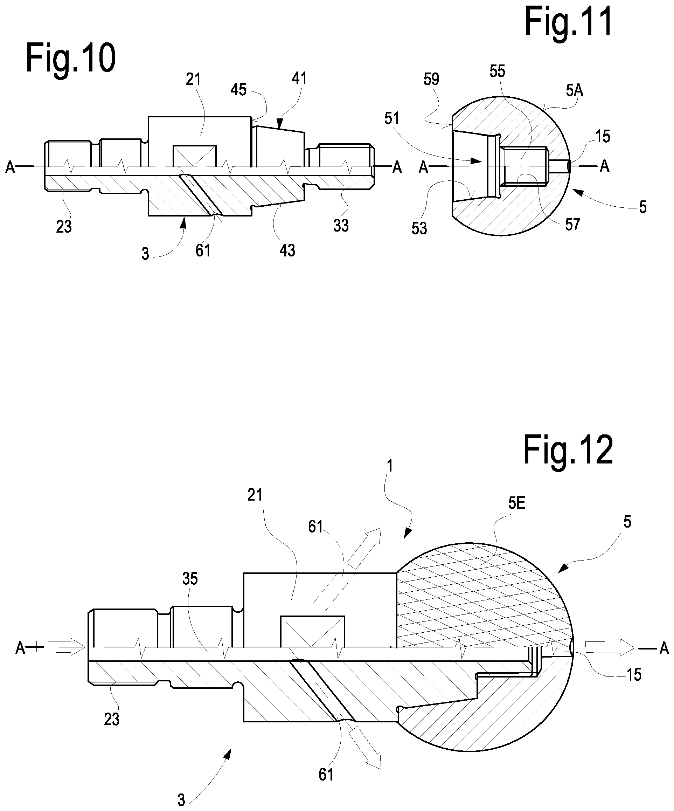

A second embodiment of the tool according to the present invention is shown in Figs. 10 to 12. The same reference numbers are used to designate similar, identical or equivalent portions, components, or elements as shown in Figs. 3 to 9.

In the embodiment of Figs. 10 to 12 the adapter 3 is again provided with a threaded spigot 23 and a coolant and/or lubricant fluid delivery duct 35 extending through the entire axial length of the adapter 3.

On the side of the central body 21 opposite the spigot 23, the adapter 3 is provided with an intermediate portion 41 forming an outer conical frustum-shaped surface 43. The larger base of the frustum-shaped surface 43 is surrounded by a planar annular surface 45, which is preferably coaxial therewith and with the spigot 23 and the body 21 of the adapter 3. From the smaller base of the conical frustum-shaped portion 41 a male screw thread portion labeled 33 projects from the adapter 3.

The cutting member 5 comprises an inner cavity 51, extending co-axially with the cutting member 5. The cavity 51 has a first portion or section having a conical frustum-shaped inner side surface 53. The conical frustum-shaped surface 53 has substantially the same shape as the conical frustum-shaped convex surface 43 to form a pair of supporting and guiding surfaces.

The cavity 51 extends further within the body of the cutting member 5 to form a threaded hole 55, wherein a female screw-thread 57 is provided. A coolant and/or lubricant fluid passage 15 extends from the bottom of the hole 55 towards the surface of the cutting member 5.

Fig. 12 illustrates the tool 1 of the second embodiment with the cutting member 5 screwed on the adapter 3. The two conical frustum-shaped surfaces 43 and 53 co-act with one another providing a guiding and centering action between the two components 3 and 5 of the tool 1. The male screw-thread portion 33 is screw-engaged in the threaded hole 55, the male screw-thread engaging the female screw-thread 57. The annular planar surface 45 forms an abutment co-acting with a planer annular surface 59 provided on the cutting member 5 and surrounding cavity 51.

The depth of the cavity 51, of the hole 55, as well as the axial length of the conical portion 41 and of the male screw-thread portion 33 of the adapter 3 are chosen so that in the assembled condition (Fig. 12) the two components 3 and 5 abut one against the other only at surfaces 45 and 59.

Coolant and/or lubricant fluid is delivered through the duct 35 from a holder 111 to the passage 15.

In some embodiments additional coolant and/or lubricant fluid passages 61 can be provided. In some embodiments, such additional passages 61 can be provided in the adapter 3, for example in the body 21 thereof. The inclination of these additional passages 61 is such that a jet of coolant and/or lubricant fluid is directed towards and around the cutting member 5 for cooling and lubricating purposes as well as for removing of chips from the machining area.

While the disclosed embodiments of the subject matter described herein have been shown in the drawings and fully described above with particularity and detail in connection with several exemplary embodiments, it will be apparent to those of ordinary skill in the art that many modifications, changes, and omissions are possible without materially departing from the invention as defined in the appended claims. Hence, the proper scope of the disclosed innovations should be determined only by the broadest interpretation of the appended claims so as to encompass all such modifications, changes, and omissions. In addition, the order or sequence of any process or method steps may be varied or re-sequenced according to alternative embodiments.

## Claims

1. A tool (1) comprising an interchangeable cutting member (5) and an adapter (3) to which said interchangeable cutting member (5) is adapted to be replaceably mounted; wherein:
the interchangeable cutting member (5) comprises a substantially ball-shaped body with a cutting surface (5A), within which a female screw-thread (57) is provided;
the adapter (3) is provided with a male screw-thread portion (33) configured and arranged for screw-engagement in the female screw-thread (57);
at least one coolant or lubricant fluid passage (13) is provided in the interchangeable cutting member (5), said coolant or lubricant fluid passage (13) ending at the cutting surface of the substantially ball-shaped cutting member;
a coolant or lubricant fluid delivery duct (35) is provided in the adapter (3), said coolant or lubricant fluid delivery duct (35) being in fluid communication with said coolant or lubricant fluid passage (13) when the interchangeable cutting member (5) and the adapter (3) are screwed together;
the adapter (3) is provided with a first convex conical surface (43), formed on a terminal portion of the adapter (3), and with a first axial abutment surface (45); and
the interchangeable cutting member (5) is provided with a second concave conical surface (53), formed in the interchangeable cutting member (5), and with a second axial abutment surface (59);
**characterized in that**
the male screw-thread portion (33) projects from the first convex conical surface (43), formed on the terminal portion of the adapter (3); and the female screw-thread (57) extends from a bottom of the concave conical surface (53) formed in the interchangeable cutting member (5);
wherein the first convex conical surface (43) and the second concave conical surface (53) are configured and arranged for mutually centering said adapter (3) and said interchangeable cutting member (5), when the adapter (3) and the interchangeable cutting member (5) are screwed together;
and wherein said first axial abutment surface (45) and said second axial abutment surface (59) are mutually engageable for axially positioning the interchangeable cutting member (5) and the adapter (3) one with respect to the other when said interchangeable cutting member (5) and said adapter (3) are screwed together.

2. The tool of claim 1, wherein said first axial abutment surface (45) and said second axial abutment surface (59) are orthogonal to a rotation axis of the tool.

3. The tool of any one of the preceding claims, wherein the at least one coolant or lubrication fluid passage (13) is coaxial with the female screw-thread (57) of the interchangeable cutting member (5).

4. The tool of any one of the preceding claims, wherein the at least one coolant or lubricant fluid passage (13) is coaxial with a rotation axis of the tool.

5. The tool of any one of the preceding claims, wherein a plurality of additional coolant or lubricant fluid passages (17) are provided in the interchangeable cutting member (5), extending from a central fluid distribution duct towards the cutting surface (5A) of the ball-shaped member and are arranged around the rotation axis of the cutting tool.

6. A tool assembly comprising a tool (1) according to any one of the preceding claims and a tool holder, the adapter (3) of the tool comprising a first connector member co-acting with a second connector member provided on said tool holder.

7. The tool assembly of claim 10, wherein said first connector member and said second connector member comprise screw threads.

## Patentansprüche

1. Werkzeug (1), umfassend ein austauschbares Schneidelement (5) und einen Adapter (3), an dem das austauschbare Schneidelement (5) austauschbar montiert werden kann; wobei:
das austauschbare Schneidelement (5) einen im Wesentlichen kugelförmigen Körper mit einer Schneidfläche (5A) umfasst, in dem ein Innengewinde (57) bereitgestellt ist;
der Adapter (3) mit einem Außengewindeabschnitt (33) bereitgestellt ist, der für einen Schraubeingriff in dem Innengewinde (57) konfiguriert und angeordnet ist;
mindestens ein Kühlmittel- oder Schmiermittelfluiddurchgang (13) in dem austauschbaren Schneidelement (5) bereitgestellt ist, wobei der Kühlmittel- oder Schmiermittelfluiddurchgang (13) an der Schneidfläche des im Wesentlichen kugelförmigen Schneidelements endet;
in dem Adapter (3) ein Kühlmittel- oder Schmiermittelfluidzufuhrkanal (35) vorgesehen ist, wobei der Kühlmittel- oder Schmiermittelfluidzufuhrkanal (35) mit dem Kühlmittel- oder Schmiermittelfluiddurchgang (13) in Fluidverbindung steht, wenn das austauschbare Schneidelement (5) und der Adapter (3) miteinander verschraubt sind;
der Adapter (3) mit einer ersten konvexen konischen Fläche (43), die an einem Endabschnitt des Adapters (3) ausgebildet ist, und mit einer ersten axialen Anlagefläche (45) bereitgestellt ist; und
das austauschbare Schneidelement (5) mit einer zweiten konkaven konischen Fläche (53), die in dem austauschbaren Schneidelement (5) ausgebildet ist, und mit einer zweiten axialen Anlagefläche (59) bereitgestellt ist;
**dadurch gekennzeichnet, dass**
der Außengewindeabschnitt (33) von der ersten konvexen konischen Fläche (43) vorspringt, die an dem Endabschnitt des Adapters (3) ausgebildet ist; und das Innengewinde (57) sich von einem Boden der konkaven konischen Fläche (53) aus erstreckt, der in dem austauschbaren Schneidelement (5) ausgebildet ist;
wobei die erste konvexe konische Fläche (43) und die zweite konkave konische Fläche (53) zum gegenseitigen Zentrieren des Adapters (3) und des austauschbaren Schneidelements (5) konfiguriert und angeordnet sind, wenn der Adapter (3) und das austauschbare Schneidelement (5) miteinander verschraubt sind;
und wobei die erste axiale Anlagefläche (45) und die zweite axiale Anlagefläche (59) miteinander in Eingriff bringbar sind, um das austauschbare Schneidelement (5) und den Adapter (3) in Bezug aufeinander axial zu positionieren, wenn das austauschbare Schneidelement (5) und der Adapter (3) miteinander verschraubt sind.

2. Werkzeug nach Anspruch 1, wobei die erste axiale Anlagefläche (45) und die zweite axiale Anlagefläche (59) orthogonal zu einer Drehachse des Werkzeugs sind.

3. Werkzeug nach einem der vorstehenden Ansprüche, wobei der mindestens eine Kühlmittel- oder Schmiermittelfluiddurchgang (13) koaxial mit dem Innengewinde (57) des austauschbaren Schneidelements (5) ist.

4. Werkzeug nach einem der vorstehenden Ansprüche, wobei der mindestens eine Kühlmittel- oder Schmiermittelfluiddurchgang (13) koaxial mit einer Drehachse des Werkzeugs ist.

5. Werkzeug nach einem der vorstehenden Ansprüche, wobei eine Vielzahl von zusätzlichen Kühlmittel- oder Schmiermittelfluiddurchgängen (17) in dem austauschbaren Schneidelement (5) bereitgestellt ist, die sich von einem zentralen Fluidverteilungskanal zu der Schneidfläche (5A) des kugelförmigen Elements erstreckt, und um die Drehachse des Schneidwerkzeugs angeordnet ist.

6. Werkzeugbaugruppe, umfassend ein Werkzeug (1) nach einem der vorstehenden Ansprüche und einen Werkzeughalter, wobei der Adapter (3) des Werkzeugs ein erstes Verbindungselement umfasst, das mit einem an dem Werkzeughalter vorgesehenen zweiten Verbindungselement zusammenwirkt.

7. Werkzeugbaugruppe nach Anspruch 10, wobei das erste Verbindungselement und das zweite Verbindungselement Schraubengewinde umfassen.

## Revendications

1. Outil (1) comprenant un élément de coupe interchangeable (5) et un adaptateur (3) auquel ledit élément de coupe interchangeable (5) est adapté pour être monté de manière remplaçable ; dans lequel :
l'élément de coupe interchangeable (5) comprend un corps sensiblement en forme de boule avec une surface de coupe (5A), à l'intérieur duquel un filetage femelle (57) est fourni ;
l'adaptateur (3) est pourvu d'une partie de filetage mâle (33) configurée et agencée pour une mise en prise par vissage dans le filetage femelle (57) ;
au moins un passage de fluide de refroidissement ou lubrifiant (13) est fourni dans l'élément de coupe interchangeable (5), ledit passage de fluide de refroidissement ou lubrifiant (13) se terminant au niveau de la surface de coupe de l'élément de coupe sensiblement en forme de boule ;
un conduit de distribution de fluide de refroidissement ou lubrifiant (35) est fourni dans l'adaptateur (3), ledit conduit de distribution de fluide de refroidissement ou lubrifiant (35) étant en communication fluidique avec ledit passage de fluide de refroidissement ou lubrifiant (13) lorsque l'élément de coupe interchangeable (5) et l'adaptateur (3) sont vissés ensemble ;
l'adaptateur (3) est pourvu d'une première surface conique convexe (43), formée sur une partie terminale de l'adaptateur (3), et d'une première surface de butée axiale (45) ; et
l'élément de coupe interchangeable (5) est pourvu d'une deuxième surface conique concave (53), formée dans l'élément de coupe interchangeable (5), et d'une deuxième surface de butée axiale (59) ;
**caractérisé en ce que**
la partie de filetage mâle (33) dépasse de la première surface conique convexe (43), formée sur la partie terminale de l'adaptateur (3) ; et le filetage femelle (57) s'étend à partir d'un fond de la surface conique concave (53) formée dans l'élément de coupe interchangeable (5) ;
dans lequel la première surface conique convexe (43) et la deuxième surface conique concave (53) sont configurées et agencées pour centrer mutuellement ledit adaptateur (3) et ledit élément de coupe interchangeable (5), lorsque l'adaptateur (3) et l'élément de coupe interchangeable (5) sont vissés ensemble ;
et dans lequel ladite première surface de butée axiale (45) et ladite deuxième surface de butée axiale (59) peuvent venir en prise mutuellement pour positionner axialement l'élément de coupe interchangeable (5) et l'adaptateur (3) l'un par rapport à l'autre lorsque ledit élément de coupe interchangeable (5) et ledit adaptateur (3) sont vissés ensemble.

2. Outil selon la revendication 1, dans lequel ladite première surface de butée axiale (45) et ladite deuxième surface de butée axiale (59) sont orthogonales à un axe de rotation de l'outil.

3. Outil selon l'une quelconque des revendications précédentes, dans lequel l'au moins un passage de fluide de refroidissement ou de lubrification (13) est coaxial avec le filetage femelle (57) de l'élément de coupe interchangeable (5).

4. Outil selon l'une quelconque des revendications précédentes, dans lequel l'au moins un passage de fluide de refroidissement ou lubrifiant (13) est coaxial avec un axe de rotation de l'outil.

5. Outil selon l'une quelconque des revendications précédentes, dans lequel une pluralité de passages supplémentaires de fluide de refroidissement ou lubrifiant (17) sont fournis dans l'élément de coupe interchangeable (5), s'étendant depuis un conduit de distribution de fluide central vers la surface de coupe (5A) de l'élément en forme de boule et sont agencés autour de l'axe de rotation de l'outil de coupe.

6. Ensemble d'outil comprenant un outil (1) selon l'une quelconque des revendications précédentes et un porte-outil, l'adaptateur (3) de l'outil comprenant un premier élément de connecteur coopérant avec un deuxième élément de connecteur fourni sur ledit porte-outil.

7. Ensemble d'outil selon la revendication 10, dans lequel ledit premier élément de connecteur et ledit deuxième élément de connecteur comprennent des filetages.
